# EUROPEAN PATENT APPLICATION

(11) **EP 4 691 678 A1**
(43) Date of publication of application: **11.02.2026**
(21) Application number: 25193452.7
(22) Date of filing: 01.08.2025
(51) Int. Cl.: B23K 9/18, B23K 9/067

(54) **ARC-START PROCESSES FOR LONG STICK OUT SUBMERGED ARC WELDING**

(30) Priority: 09.08.2024 US 202463681731 P; 16.07.2025 US 202519270847
(71) Applicant: Lincoln Global, Inc., Cleveland, OH 44117 (US)
(72) Inventor: FOLZENLOGEN, David Michael, Lakewood, 44107 (US)
(74) Representative: Hoyng Rokh Monegier B.V.

(57) **Abstract**

The disclosed technology generally relates to welding technologies and more particularly to electrode assemblies for arc welding, e.g., submerged arc welding. In one aspect, a welding system comprises a welding power source and an electrode assembly operably coupled to the welding power source and an electrode. The welding power source is configured to apply a direct current electrode negative (DCEN) to the electrode using the electrode assembly to establish an arc between the electrode and a workpiece and to apply a direct current electrode positive (DCEP) or alternating current (AC) to the electrode after the arc is established.

## Description

### BACKGROUND

### Field

The disclosed technology generally relates to welding technologies and more particularly to methods for operating an arc welding apparatus, e.g., a submerged arc welding (SAW) apparatus.

### Description of the Related Art

Various welding technologies utilize welding wires that serves as a source of metal. For example, in metal arc welding, an electric arc is created when a voltage is applied between a consumable weld electrode wire, which serves as one electrode that advances towards a workpiece, and the workpiece, which serves as another electrode. The arc melts a tip of the metal wire, thereby producing droplets of the molten metal wire that deposit onto the workpiece to form a weldment or weld bead.

Technological and economic demands on welding technologies continue to grow in complexity. For example, the need for higher bead quality in both appearance and in mechanical properties continues to grow, including high yield strength, ductility and fracture toughness. Simultaneously, the higher bead quality is often demanded while maintaining economic feasibility. Some welding technologies aim to address these competing demands by improving the consumables, e.g. by improving the physical designs and/or compositions of the electrode wires.

Submerged arc welding (SAW) can provide highly economic solutions for some applications. The high deposition rates attained with submerged arc are chiefly responsible for the economies achieved with the process.

### SUMMARY

In an aspect, a welding system comprises a welding power source and a welding tool operably coupled to the welding power source and a electrode. The welding power source is configured to apply a direct current electrode negative (DCEN) to the electrode using the welding tool to establish an arc between the electrode and a workpiece and to apply a direct current electrode positive (DCEP) or alternating current (AC) to the electrode after the arc is established.

In another aspect, a method of operating a welding system is provided. The method includes applying a direct current electrode negative (DCEN) to a electrode to establish an arc between the electrode and a workpiece and then, after establishing the arc, applying a direct current electrode positive (DCEP) or alternating current (AC) to the electrode.

### BRIEF DESCRIPTION OF THE DRAWINGS

Figure 1 schematically illustrates a submerged arc welding (SAW) system according to embodiments of the present technology.
Figure 2 illustrates a conventional electrode assembly for a SAW system.
Figures 3A illustrates a conventional electrode assembly for a SAW system over a workpiece having a groove.
Figure 3B illustrates a long stick-out (LSO) electrode assembly for a SAW system over a workpiece having a groove.
Figure 4 is a flowchart of a method of operating a welding system in which a direct current electrode positive (DCEP) is applied to the electrode to initiate welding.
Figure 5 illustrates graphs of the voltage, current, and wire feed speed of a welding system during the method illustrated in Figure 4.
Figures 6A-6G illustrates an LSO electrode at various times during the process illustrated in Figure 4.
Figure 7 is a flowchart illustrating a method of operating a welding system in which a direct current electrode negative (DCEN) is applied to the electrode to initiate welding, according to some embodiments.
Figure 8 illustrates graphs of the voltage, current, and wire feed speed of a welding system during the method illustrated in Figure 7.
Figures 9A-9G illustrates an LSO electrode at various times during the process illustrated in Figure 7.
Figure 10 is a flowchart illustrating a method of operating a welding system in which a DCEN-biased asymmetric alternating current (AC) is applied to the electrode initiate welding, according to some embodiments.
Figure 11 illustrates graphs of the voltage and current of a welding system during the method illustrated in Figure 10.

### DETAILED DESCRIPTION

In processes using a consumable electrode, the electrode or the wire melts to provide an additive metal that fills a gap to form a weld joint that joins two metal workpieces. The welding processes using consumable electrodes include shielded metal arc welding (SMAW), gas metal arc welding (GMAW) or metal inert gas (MIG) welding, flux-cored arc welding (FCAW), metal-cored arc welding (MCAW), and submerged arc welding (SAW), among others.

### Submerged Arc Welding

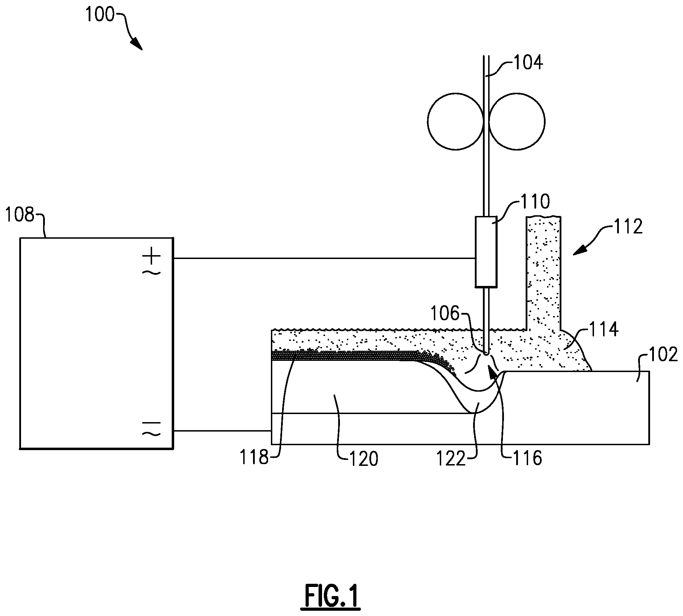

Figure 1 schematically illustrates a submerged arc welding (SAW) system 100 for depositing a filler or weld metal onto a workpiece 102. The system 100 includes an electrode 104 having a tip 106, a contact tip 110 coupled to the electrode 104, and a power supply 108, which is electrically coupled to the contact tip 110 and the workpiece 102. While not illustrated, the system 100 also includes one or more processors or controllers communicatively coupled to the power supply 108 and non-transitory computer readable storage medium. The non-transitory computer readable storage media stores instructions that when executed by the one or more processors or controllers, cause the one or more processors to perform various welding methods disclosed herein. The system 100 also includes a flux delivery system 112, which is configured to dispense flux 114 onto the workpiece 102 during the SAW process. The electrode 104 generally comprises a metal or alloy while the flux comprises granular fusible material. During the SAW process, heat is derived from an arc 116 between the electrode 104 and the workpiece 102. The arc is shielded by a blanket of the flux 114 which is placed over the joint area ahead of the arc 116. Filler metal is obtained primarily from the electrode 104 which is continuously fed through the blanket of flux 114 into the arc 116 and pool 122 of molten flux. Additional filler metal may be obtained by adding cold wire or hot wire to the weld pool 122 or from metal powder contained in the flux 114. Accordingly, in SAW, unlike the other fluxed processes, two consumables (the electrode 104 and the flux 114) are used and these two consumables may be supplied separately.

The distinguishing feature of SAW is the flux 114, which covers the weld area and prevents arc radiation, sparks, spatter and fumes from escaping. The flux 114 allows for achieving high deposition rates and high quality weld deposit characteristics. In addition to shielding the arc 116 from view, the flux 114 provides a slag 118 which protects the weld metal 120 as it cools, deoxidizes and refines the weld metal 120, insulates the weld to reduce the cooling rate and helps shape the weld contour.

During the SAW process, the heat of the arc 116 melts some of the flux 114 along with the tip 106 of the electrode 104 to form a weld pool 122, as illustrated in FIG. 1. The tip 106 of the electrode 104 and the welding zone are always surrounded and shielded by molten flux 114, which is itself covered by a layer of unfused flux 114. The electrode 104 is held a short distance above the workpiece 102 with the arc 116 forming between the electrode 104 and the workpiece 102. As the electrode 104 progresses along the joint, the lighter molten flux 114 rises above the molten metal in the weld pool 122 as slag 118. The molten metal in the weld pool 122, which has a higher melting (freezing) point, solidifies while the slag 118 above it is still molten. The slag 118 then freezes over the newly solidified weld metal 120, continuing to protect the metal 120 from contamination while it is very hot and would react with atmospheric oxygen and nitrogen. After cooling and removing any unfused flux 114 for reuse, the solidified slag 118 may be easily removed from the weld.

The power supply 108 generates a voltage and current for the system 100 and the voltage and current are applied to the workpiece 102 and the electrode 104. The current is applied to the electrode via the contact tip 110. High currents can be used in submerged arc welding and extremely high heat can be generated. Because the current is applied to the electrode 104 a short distance above its tip 106, relatively high amperages can be used on small diameter electrodes. This results in extremely high current densities on relatively small cross sections of electrode. Currents as high as or exceeding 600 amperes can be carried on electrodes as small as 64", giving a density in the order of 100,000 amperes per square inch, which is six to ten times greater than the current density carried on stick electrodes.

Because of the high current density, the melt off rate is much higher for a given electrode diameter than with stick-electrode welding. The melt-off rate is affected by the electrode material, the flux 114, type of current, polarity, and length of wire beyond the point of electrical contact in the gun or head.

Submerged arc welding may be performed with either direct current (DC) or alternating current (AC) power. Direct current gives better control of bead shape, penetration, and welding speed, and starting is relatively easier. Bead shape is usually best with DC electrode positive (DCEP or reverse polarity), which also provides maximum penetration. Highest deposition rates and minimum penetration can be obtained with DC electrode negative (DCEN or straight polarity). Alternating current minimizes arc blow and gives penetration between that of DCEP and DCEN.

The insulating blanket of flux 114 above the arc 116 prevents rapid escape of heat and concentrates it in the welding zone. Not only are the electrode 104 and base metal of the workpiece 102 melted rapidly, but the fusion is deep into the base metal. The deep penetration allows the use of small welding grooves, thus minimizing the amount of filler metal per foot of joint and permitting fast welding speeds. Fast welding, in turn, minimizes the total heat input into the assembly and, thus minimizes problems of heat distortion. Even relatively thick joints can be welded in one pass by submerged arc welding.

Welds made under the protective layer of flux 114 have good ductility and impact resistance and uniformity in bead appearance. Mechanical properties at least equal to those of the base metal are consistently obtained. In single-pass welds, the fused base material is large compared to the amount of filler metal used. Thus, in such welds the base metal may greatly influence the chemical and mechanical properties of the weld. For this reason, it is sometimes unnecessary to use electrodes of the same composition as the base metal for welding many of the low-alloy steels. However, the chemical composition and properties of multipass welds are less affected by the base metal and depend to a greater extent on the composition of the electrode, the activity of the flux, and the welding conditions.

Through regulation of current, voltage, and travel speed, the operator can exercise close control over penetration to provide any depth ranging from deep and narrow with high-crown reinforcement, to wide, nearly flat beads with shallow penetration. Beads with deep penetration may contain on the order of 70% melted base metal, while shallow beads may contain as little as 10% base metal. In some instances, the deep-penetration properties of submerged arc welding can be used to eliminate or reduce the expense of edge preparation.

The flux serves several functions in submerged arc welding. These include covering the molten weld metal to protect it from the atmosphere and acting as a slag which refines the molten deposit by scavenging oxides and other non-metallic inclusions. Metallic additions to the flux can add to the alloy content of the deposit and deoxidize it.

There are four types of fluxes based on their method of manufacture; fused, bonded, agglomerated and mechanically mixed.

Fluxes are also identified as basic, acid, and neutral. Basic fluxes contain oxides of metals which dissociate easily while acidic fluxes contain oxides which dissociate to a small extent. A neutral flux does not add or subtract from the composition of the weld deposit. Fluxes having a ratio of CaO or MnO to SiO₂ which is greater than one are considered basic, those near one are considered neutral, and those less than one are acidic.

With proper selection of equipment, submerged arc welding is widely applicable to the welding requirements of industry. It can be used with all types of joints, and permits welding a full range of carbon and low alloy steels, from 16-gage sheet to the thickest plate. It is also applicable to some high-alloy, heat-treated, and stainless steels, and is a favored process for rebuilding and hard surfacing. Any degree of mechanization can be used - from hand-held semi-automatic guns to boom or track-carried and fixture-held multiple welding heads.

The high quality of submerged arc welds, the high deposition rates, the deep penetration, the adaptability of the process to full mechanization, and the comfort characteristics (no glare, sparks, spatter, smoke, or excessive heat radiation) make it a preferred process in steel fabrication. It is used extensively in ship and barge building, railroad car building, pipe manufacture, and in fabricating structural beams, girders, and columns where long welds are required. Automatic submerged arc installations are also key features of the welding areas of plants turning out mass-produced assemblies joined with repetitive short welds.

Other factors than deposition rates enter into the lowering of welding costs. Continuous electrode feed from coils, ranging in weight from 60 to 1,000 pounds, contributes to a high operating factor. Where the deep-penetration characteristics of the process permit the elimination or reduction of joint preparation, expense is reduced. After the weld has been run, cleaning costs are minimized, because of the elimination of spatter by the protective flux.

When submerged-arc equipment is used properly, the weld beads are smooth and uniform, so that grinding or machining are rarely required. Since the rapid heat input of the process minimizes distortion, the costs for straightening finished assemblies are reduced, especially if a carefully planned welding sequence has been followed. Submerged arc welding, in fact, often allows the pre-machining of parts, further adding to fabrication cost savings.

Because of these and other advantages provided by SAW, there is a desire and need to further improve various aspects of SAW, including even higher productivity and weld quality. For example, as one of the technical advantages of SAW derives from preheating the consumable electrode, there is a desire and need to further improve the preheating arrangement through improved electrode assembly design.

### Long Stick-Out Electrode Assembly for Submerged Arc Welding

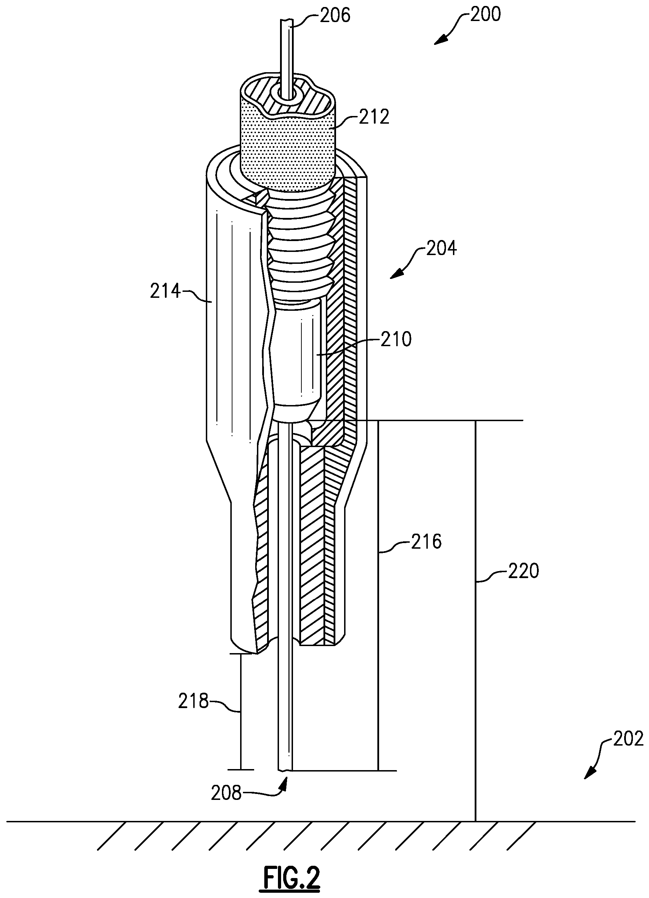

FIG. 2 illustrates an electrode assembly 200 defining an electrical stick-out and positioned over a workpiece 202. The electrode assembly 200 includes a head portion 224 configured to receive a electrode 204. The head portion 224 includes a contact tip 210, an electrode guide tube 226, and an insulated guide 228. The contact tip 210 is disposed radially around the electrode 204 and is configured to transfer current from a power source (e.g., power supply 108 shown in Figure 1) to the electrode 204. The electrode 204 includes a tip portion 206 configured to extend beyond the head portion 224. The portion of the electrode 204 that extends between the end portion 206 and the end of the head portion 224 is referred to as the visible stick-out 232 while the portion of the electrode 204 that extends between the tip portion 206 and the contact tip 210 is referred to as the electrical stick-out or electrical electrode extension 230. Unless stated otherwise, a stick-out length as used herein refers to the length of the electrical stick-out 230, which is the parameter predominantly affecting the electrical response of the electrode assembly 200. During operation of the electrode assembly 200, the tip portion 206 is positioned adjacent to the workpiece 202 and the distance between the contact tip 210 and the workpiece 202 is referred to as the contact tip to work distance (CTWD) 234.

The electrical stick-out 230 of the electrode 204 is preheated by Joule or resistive heating. If the electrical electrode extension 230 is not sufficiently long, the electrode 204 may not be sufficiently preheated. Increasing the length of the electrical stick-out 230 increases the electrical resistance of the circuit, which in turn increases the heating and hence the temperature of the tip 206 of the electrode 204, leading to increased melting and deposition rate. The length of the electrical stick-out 230 in turn controls the dimensions of the weld bead since the length of the filler wire extension affects the burn-off rate. Further, electrical electrode extension 230 exerts an influence on penetration through its effect on the welding current. As the length of the electrical electrode extension 230 is increased, the preheating of the electrode 204 and the voltage drop across the electrode 204 increases. The greater voltage drop can result in the bead shape being more convex, which can be overcome by increasing the input voltage by 2-5 volts. The length of the electrical stick-out 230 distance can be approximately 3-10 times a diameter of the electrode 204 (for conventional SAW processes) depending on the type of steel being welded, for traditional steel welding processes.

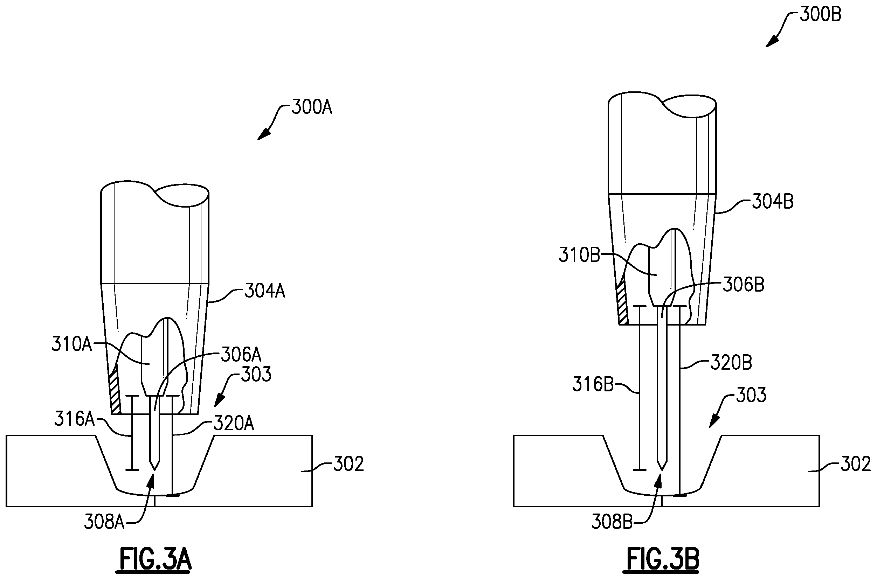

Figure 3A depicts an electrode assembly 300A positioned over a workpiece 302 having a groove 303. In the illustrated configuration, the stick-out portion 330A of the electrode 304A extends a conventional distance beyond the contact tip 310A (e.g., 3 to 12 times the diameter of the electrode). The electrode assembly 300A is positioned such that the head portion 324A is positioned over the groove 303 and the tip 306A of the electrode 304A is within the groove 303. More specifically, the head portion 324A is positioned such that the tip 306A is adjacent to the bottom of the groove 303 without the head portion 324A contacting the workpiece 302. In the illustrated embodiment, the tip 306A is positioned within the groove such that the CTWD 334A is about 25 mm. Positioning the tip 306A closely adjacent to the bottom of the groove 303 allows for better and more consistent arcing between the tip 306A and the workpiece 302, thereby resulting in a more consistent deposition of filler metal into the groove 303 and improved weld quality and efficiency.

To further improve upon submerged arc welding (SAW) technology, a long stick-out (LSO) or extended stick-out technology developed by Lincoln Electric Company may be employed. Long stick-out SAW refers to SAW processes in which the length of the wire that sticks out (the "stick-out length") of the electrode contact tip is increased relative to conventional SAW processes., e.g., longer than about 25 mm, such that the CTWD is also increased. As used herein, LSO refers to an electrode configuration in which the electrical stick out exceeds about 10 times a diameter of the electrode 304A. The longer stick-out length allows for a greater length of the electrode to be preheated prior to melting at the electrode tip, which increases the melt-off rate of the electrode because it is easier to melt a preheated electrode wire for a given current density. The LSO SAW process can provide significant improvement in productivity and can provide up to 100% increase in submerged arc welding deposition rates over traditional SAW processes. The LSO SAW process can reduce or eliminate arc striking problems by allowing complete tailoring of the arc start characteristics. The LSO SAW can also provide improved control over the input of energy into the weld, lower heat input (less distortion), flux / wire ratio reduction.

Figure 3B depicts an electrode assembly 300B positioned over the groove 303 in workpiece 302. The electrode assembly 300B employs an LSO technology such that the electrical stick-out 330B extends beyond the contact tip 310B by substantially more than the stick-out 330A extending beyond the contact tip 310A (Figure 3A). For example, in some embodiments, the stick-out 330B can have a length between 10 and 40 times the diameter of the electrode 304B. In some embodiments, the stick-out 330B can have a length that is more than 40 times the diameter of the electrode 304B. The increased length of the stick-out portions 330B allows for a greater length of the electrode 304B to be preheated prior to melting at the electrode trip, thereby allowing for increased melt-off and deposition rates, as explained above.

The increased length of the stick-out portions in LSO SAW systems also allows for the LSO systems to be used to easily fill grooves that conventional SAW systems are either incapable of filling or can only fill using extremely precise arrangements and high operator skill. Specifically, while conventional SAW systems can be used with wide and/or short grooves, conventional SAW systems typically cannot be easily used with deeper and/or narrower grooves because the size and shape of the head portion prevents it from being positioned further within the deep/narrow groove without contacting and interacting with the workpiece This results in the tip of the electrode being spaced excessively far from the bottom of the groove, which results in poor arcing between the electrode and the workpiece and leads to a poor filler metal deposition rate and poor weld quality. Accordingly, it can be difficult for SAW systems having conventional stick-out lengths to from forming high-quality welds within deep and/or narrow grooves. In contrast, when the increased stick-out length of LSO SAW systems allows for the tip of the electrode to be adjacent to the bottom of narrow/deep grooves and the reduced distance between the electrode tip and the bottom of the groove results in better arcing between the electrode and the workpiece. Accordingly, in addition to improving weld quality and deposition rates due to allowing for additional preheating of the electrode prior to arcing, LSO SAW techniques also allow for the deposition of filler metal into the deeper and narrower grooves than conventional SAW techniques.

According to various embodiments, the LSO SAW electrode assemblies are capable of achieving significantly higher deposition rates compared to conventional SAW electrode assemblies for the same current. During the welding process, current is transferred into the electrode by the contact tip at a specific amperage and voltage. As the current flows through the electrode toward the tip of the electrode, the voltage drops and the electrode heats up. At the tip of the electrode, the current arcs to the workpiece. For LSO SAW assemblies, the increased length of the electrode results in a higher fraction of the total voltage drop occurring within the electrode than in conventional SAW assemblies. In some embodiments, the LSO SAW assemblies can be configured such that the voltage drop between the contact tip and the tip of the consumable electrode is at least 5%, at least 10%, at least 15%, or at least 20% (or is a value in a range defined by any of these values) of a total voltage drop across the total CTWD. In other embodiments, the electrode assembly is configured such that the voltage drop between the contact tip and the tip of the consumable electrode represents at least 1/30 of the total voltage drop across the CTWD, 1/15 of the total voltage drop across the CTWD, 1/10 of the total voltage drop across the CTWD, 1/7 of the total voltage drop across the CTWD, 1/5 of the total voltage drop across the CTWD, or a value in a range defined by any of these values. For example, in a conventional SAW electrode assembly where the total voltage drop along the CTWD is 30V, only about 1V of that total voltage drop may occur within the consumable electrode while the rest (about 29V) may drop across the arc length. In contrast, for an LSO SAW system of the same total voltage drop of 30V, about 4V of may drop occurs across the CTWD while the rest (about 26V) may drop cross the arc length. The increased voltage drop through the longer electrode results in the electrode being heated to a higher temperature than the electrode in a conventional SAW configuration and, as a result, the deposition rate increases.

Experiments have shown that the deposition rate per current for LSO SAW assemblies can exceed 0.05 lbs./hr./A, 0.06 lbs./hr./A, 0.07 lbs./hr./A, 0.08 lbs./hr./A, or a value in range defined by any of these values during welding. Additionally, experiments have shown that LSO SAW assemblies can achieve a given deposition rate with less current than conventional SAW electrode assemblies. For example, an LSO SAW assembly can achieve a deposition rate exceeding 35 lbs./hr. with current less than about 900A, 850A, 800A, 750A, 700A, or in a range defined by any of these values (e.g., at a current of about 700A - 750A) while conventional SAW electrode assemblies require a current exceeding about 900A to achieve a similar deposition rate. Advantageously, the improvement in deposition rate over conventional SAW electrodes increases at higher current, as Joule heating (I²R) varies as a square of current. That is, the relative improvement in deposition rate is projected to increase with increasing current.

In LSO SAW systems, the consumable electrode (e.g., electrode 304B) extends beyond the end of the head portion (e.g., head portion 324B) such that the arcing tip (e.g., tip 306B) is visible. As previously discussed, the portion of the electrode that extends beyond the contact tip portion is referred to as the electrical stick-out. In some embodiments, the electrical stick-out can be based on the diameter of the electrode. In some embodiments, the length of the electrical stick-out can depend on the type of steel being welded, e.g., whether the steel being welded is a low alloy steel containing less than about 8 wt. % of non-iron elements or a high alloy steel containing greater than about 8 wt. % of non-iron elements. For example, in conventional SAW processes the electrical stick-out length can be approximately 7-10 times the diameter of the electrode for welding low and mild steel but can be approximately 3-5 times the diameter of the electrode for welding high alloy steel. In contrast, in LSO SAW processes according to various embodiments, the electrical stick-out distance (measured between a contact tip portion disposed at an end of the head portion and the arcing tip of the consumable electrode) can be at least 15 times the diameter of the electrode such that a stick-out-to-diameter ratio for LSO SAW processes and systems can be 15, about 20, about 25, about 30, about 35, about 40, about 45, about 50, about 55, about 60, greater than 60, or a value in a range defined by any of these values. In some embodiments, the electrode can have a diameter between 2.5 mm and 5.0 mm and the electrical stick-out distance can be about 125 mm, about 130 mm, about 135 mm, about 140 mm, about 145 mm, about 150 mm, about 155 mm, about 160 mm, about 165 mm or a value in a range defined by any of these values. For example, in at least one embodiments, the electrical stick-out length can be 155 mm and diameter of the electrode can be 3.2 mm, which means that the stick out-to-diameter ratio is about 48. In another embodiment, the electrical stick-out length can be 125 mm and the electrode diameter can be 4.0 mm, which means that the stick-out-to-diameter ratio is about 31.

While increased stick-out length can advantageously provide certain advantages, such as higher deposition rate, various problems can arise for stick-out lengths exceeding, e.g., 25 mm, when conventional electrode assemblies are used. For example, the heated wire can move out of alignment and wander in the welding groove as the stick-out distance increases. This can pose a problem especially in welding deep and narrow grooves that may be used to minimize time and cost of joining thick sections, as LSO welding electrode assemblies can be too bulky to reach the bottom of the groove. To address this and other challenges, some electrode assemblies include a ceramic extension portion that serves as an insulated guide for the electrode. The extension portion provides, among other things, electrical and thermal insulation as well as mechanical rigidity to the heated electrode.

### Arc-Start Processes

One issue with LSO in SAW is that the arc starting performance of LSO SAW systems has never matched that of the SAW systems with standard stick outs.

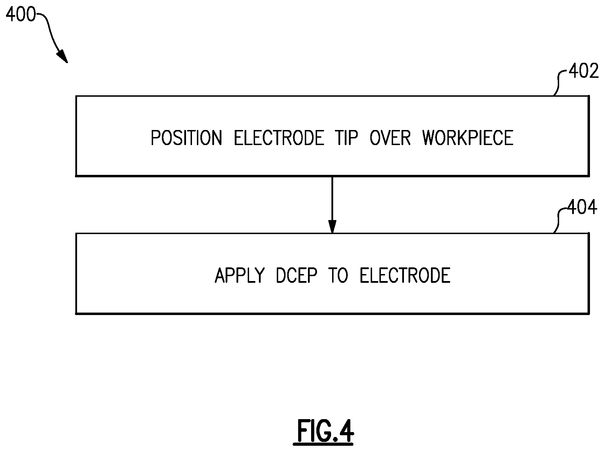

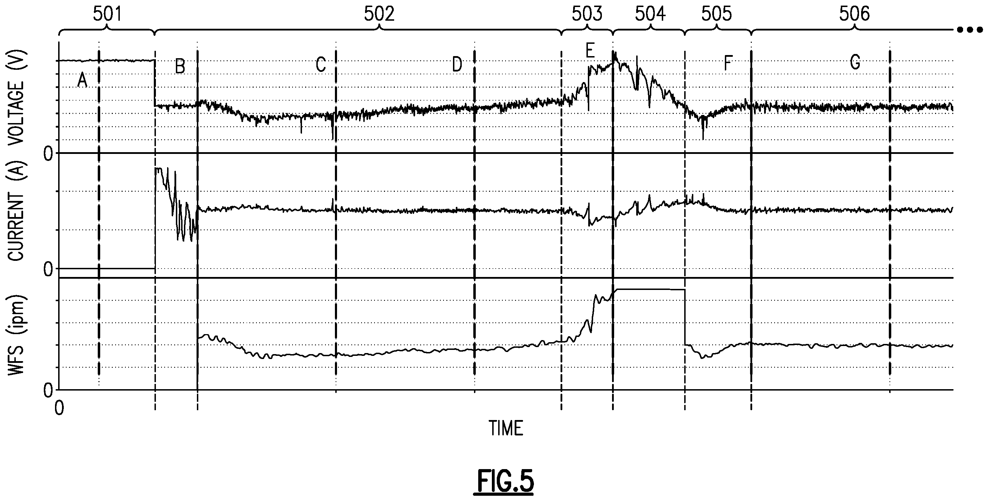

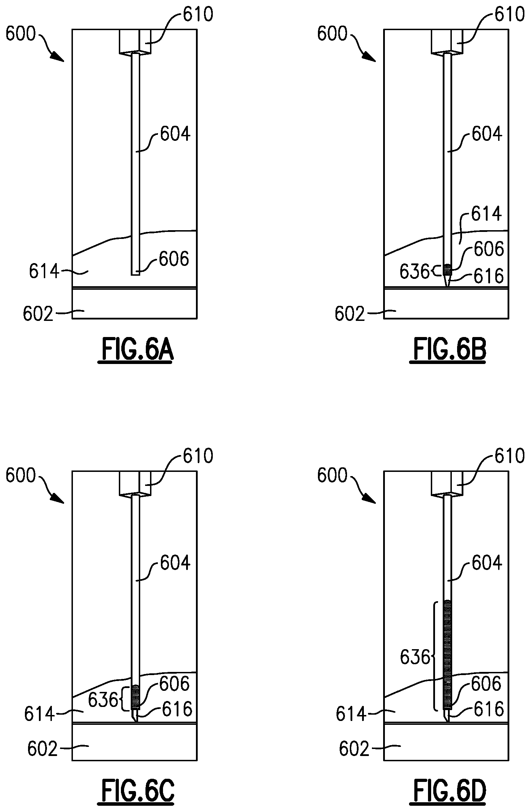

Figure 4 is a flowchart illustrating a method 400 of operating a welding system that includes a conventional arc-start process, Figure 5 illustrates graphs of the voltage, current, and wire feed speed (WFS) of the system before, during, and after the method 400, and Figures 6A-6G are images of the electrode 604 of the system 600 over the workpiece 602 at various points of time during method 400. In some embodiments, the system 600 can be a LSO SAW system that is generally similar to the electrode assembly 300B shown and described above in connection with Figure 3B.

As shown in Figure 6A, at step 402 of method 400, the welding process is initiated by submerging the tip 606 of the electrode 604 into the flux 614 and positioning it over the workpiece 602 without applying a load between the electrode 604 and the workpiece 602. During this time, which is represented by time period 501 in Figure 5, the voltage measured by the welding system is the open circuit voltage. For example, in some embodiments, the open circuit voltage can be about 70 volts. However, because a load is not applied between the electrode and the workpiece during time period 501, there is typically no current flowing between the electrode 604 and the workpiece 602. Additionally, an arc has not been established yet so the WFS is 0 ipm.

At step 404, a direct current electrode positive (DCEP) load is applied to the electrode 604. As shown in Figure 6B, applying the DCEP to the electrode 604 causes arc 616 to form between the electrode 604 and the workpiece 602, which allows current to flow from the workpiece 602 and into the electrode 604. During this time, which is represented by time period 502 in Figure 5, the voltage decreases from the open circuit voltage and the current jumps up as current starts to flow. In some embodiments, the current fluctuates immediately after the arc 616 is established (e.g., during the initial few 100 ms of time period 502) but can stabilize shortly after the arc 616 is established. For example, in some embodiments, the current can initially fluctuate between about 1200 and 400 A before stabilizing at about 750 after about 200 ms.

The system 600 is configured to continuously feed wire during the welding process so that the electrode tip 606 remains a suitable distance away from the workpiece 602 during the welding process to ensure that the arc 616 is maintained and to ensure the weld quality is suitable. In some embodiments, the system 600 is capable of detecting changes in the voltage between the electrode 604 and the workpiece 602 and varying the WFS of the system 600 based on changes in the voltage. The voltage between the electrode 604 and the workpiece 602 is correlated with the melt-off rate of the electrode 604, so varying the WFS based on changes in voltage allows for the system 600 to account for changes to the melt-off rate. In some embodiments, the system 600 is configured to automatically increase the WFS when the it detects a voltage increase to account for a corresponding increase in the melt-off rate to ensure that the electrode tip 606 remains a suitable distance from the workpiece 602 during the welding process so that the arc 616 can be maintained.

Shortly after the DCEP is applied and the arc 616 forms, the system 600 detects the change in voltage and automatically increases the WFS to account for the distance between the unmelted portion of the electrode 604 and workpiece 602 increasing (due to the tip 606 melting and breaking off). For example, in some embodiments, the system 600 can increase the WFS to about 80 ipm. In some embodiments, the voltage between the electrode 604 and the workpiece 602 can steadily increase during time period 502 and the system 600 can automatically increase the WFS during time period 503 to account for the increased melt-off rate as a result of the increasing voltage.

During time period 502, the current flowing through the electrode 604 causes the portion of the electrode 604 between the contact tip 610 and the workpiece 602 to heat up (via resistive heating) and portion 636 of the electrode 604 to start to glow. As shown in Figure 6B, the glowing portion 636 is initially very small and only extends a short distance away from the tip 606. However, As the electrode continues to heat up during time period 502, the length of glowing portion 636 increases. For example, as shown in Figure 6C, the glowing portion 636 can extend to just below the top of the pile of flux 614 at about half-way through time period 502 and, as shown in Figure 6D, can extend well above the flux 614 and can be about halfway to the contact tip 610 near the end of time period 502 is almost over.

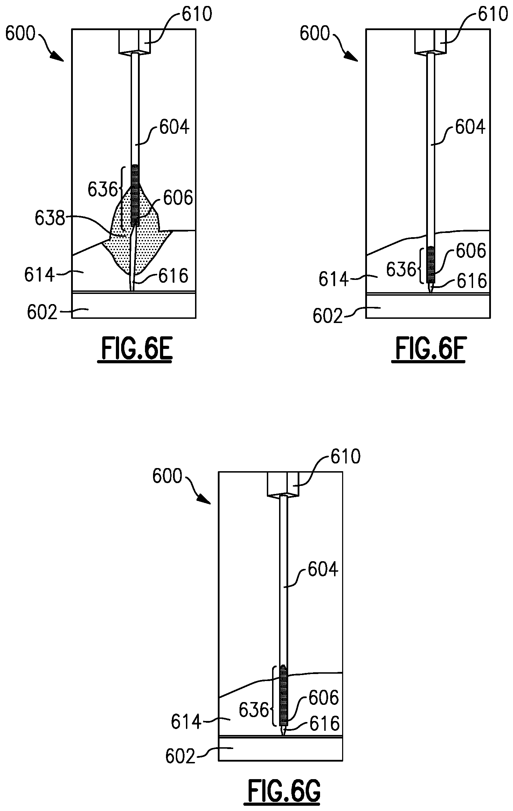

By the end of time period 502, the electrode 604 can be significantly preheated and the system 600 increases the voltage between the electrode 604 and the workpiece 602 to maintain the arc 616. However, this significant increase in voltage results in even greater heating of the electrode 604, leading to an increased melt-off rate and an increased WFS to attempt to compensate for the increased melt-off rate. This feedback loop continues until, as shown in Figure 6E, a large portion of the electrode 604 melts off and falls onto the workpiece 602. When this happens, an arc flare 638 occurs. The arc flare 638 causes the current to fluctuate and the voltage to spike, which in turn causes the system to ramp the WFS to attempt to reduce the apparent gap between the electrode tip 606 and the workpiece when the system detects the increased voltage. The high arc voltage, fluctuating current, and spike in WFS result in poor bead shape of the weld. For example, in some embodiments, the arc flare causes the voltage to spike to about 70 V and the WFS to spike to over 200 ipm. In some embodiments, the system can automatically ramp the WFS to system's maximum WFS when it detects the increased voltage due to the arc flare.

When the system increases the WFS to reduce the gap between the electrode 604 and the workpiece 602, the system can overcorrect for the perceived gap between the electrode 604 and the workpiece 602 and may increase the WFS too much. When this happens, there may not be sufficient time for the unmelted tip 606 of the electrode 604 to sufficiently preheat and melt before the tip 606 contacts the workpiece 602, which can result in the still-solid electrode 604 striking the workpiece 602. Accordingly, in some embodiments, when the system 600 detects the voltage spike caused by the arc flare 638 and subsequently increases the WFS, the system can overcorrect and this overcorrection can cause a hard short between the electrode 604 and the workpiece 602.

During time period 504, when the solid electrode 604 is shorted to the workpiece 602, the voltage decreases and the current increases. For example, in some embodiments, the voltage decreases to about 47 V and the current increases to about 750 A. On the other hand, the WFS remains at the elevated speed for the duration of time period 505. In some embodiments, the system 600 monitors the voltage and maintains the WFS at the elevated speed while the voltage is above a threshold value. After time period 505, the system 600 reduces the WFS.

During time period 505, the voltage and WFS initially decrease while the current initially increases before all three stabilize. For example, in some embodiments, the voltage decreases to about 28 V before stabilizing at about 35 V, the current increases to about 850 A before stabilizing at about 750 A, and the WFS decreases to about 70 ipm before stabilizing at about 100 ipm.

The fluctuating voltage and current after the short can lead to poor weld quality. Additionally, the electrode 604 can be insufficiently heated for optimal welding for an extended period of time after the arc flare occurs. As shown in Figure 6F, the glowing portion 636 of the electrode wire at the end of time period 506 is not as long as it is in Figures 6D, indicating that the electrode 604 after the arc flare is less heated than it was before and during the arc flare. However, once the system reaches equilibrium (by the end of time period 505), the electrode 604 continues to preheat during time period 506 until, as shown in image Figure 6G, the glowing portion 636 is longer than it is in in Figure 6F and extends above the bed of flux 614, indicating that the electrode 604 is sufficiently preheated for optimal welding during time period 508. Accordingly, it can take several seconds for the system 600 reach a steady state of optimal welding when initiating welding using the method 400. In some embodiments, the amount of time that passes from when the DCEP is first applied (at the start of time period 502) to initiate the welding process to when the system 600 reaches steady state (after time period 505) can be between about 4 and 8 seconds. For example, in some embodiments, it can take about 6 seconds for the system to reach steady state of optimal welding when initiating welding using a conventional DCEP process. Moreover, the force of the still-solid electrode 604 striking the workpiece 602 after the arc flare can cause the electrode 604 to bend and, in embodiments where the system 600 is an LSO SAW system, the bending electrode 604 can contact the ceramic extension, which can damage or break the ceramic extension.

Accordingly, there is a desire and need to improve the arc-start characteristics of welding systems.

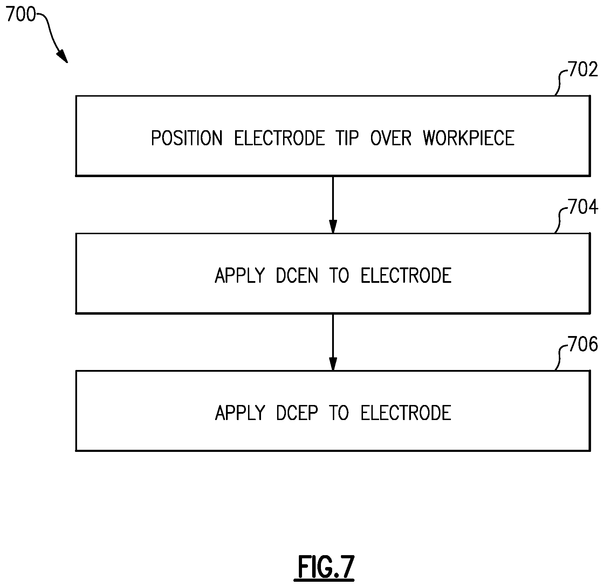

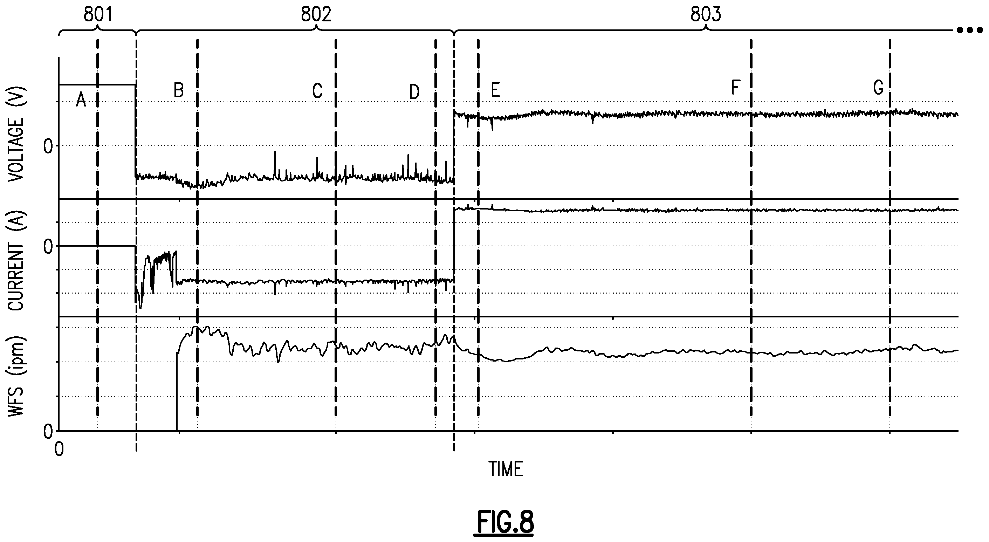

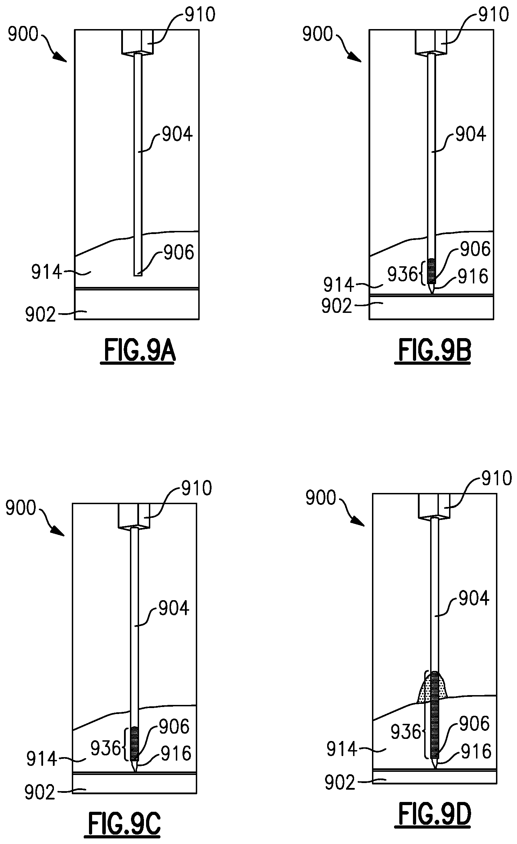

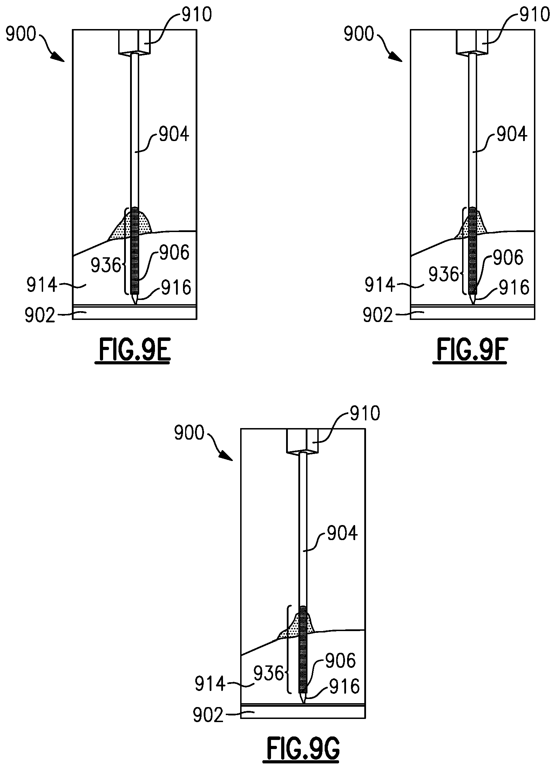

To improve the arc-start characteristics of welding systems, the arc can be established by first applying a direct current electrode negative (DCEN) to the electrode and then switching to DCEP. As described above in connection with Figures 4-6G, when the power supply is operating in a DCEP mode, the electrode is connected to the positive terminal, the workpiece is connected to the negative terminal, and the applied current flows from the workpiece and into the electrode. In contrast, when the system is operating in a DCEN mode, the electrode is connected to the negative terminal, the workpiece is connected to the positive terminal, and the current flows from the electrode and into the workpiece. Figure 7 is a flow chart illustrating a method 700 of operating a welding system that includes a DCEN arc-start process, Figure 8 is graph of the voltage, current, and WFS of the welding system before, during, and after the method 700, and Figures 9A-9G are images of an electrode 904 of system 900 over the workpiece 902 at various points of time during method 700. In some embodiments, the system 900 can include one or more processors or controllers communicatively coupled to the welding power supply and non-transitory computer readable storage medium. The non-transitory computer readable storage media stores instructions that when executed by the one or more processors or controllers, cause the one or more processors to perform various welding methods, including method 700. In some embodiments, the system 900 can be an LSO SAW system that is generally similar to electrode assembly 300B shown and described above in connection with Figure 3B. In some embodiments, including the illustrated embodiment, the system 900 is a single-arc system that includes a single electrode 904. In other embodiments, however, the system 900 can be a multi-arc system that includes multiple electrodes 904 positioned adjacent to each other and that are each configured to generate arcs 916 during the welding process.

As shown in Figure 9A, at step 702 of the method 700, the welding process is initiated by submerging the tip of the electrode 904 into the flux 914 and positioning the tip 906 over the workpiece 902 without applying a load between the electrode 904 and the workpiece 902. During this time, which is represented by time period 801 in Figure 8, the voltage measured by the welding system is the open circuit voltage. For example, in some embodiments, the open circuit voltage can be about 70 volts. However, because a load is not applied between the electrode and the workpiece during time period 801, there is typically no current flowing between the electrode 904 and the workpiece 902. Additionally, an arc has not been established yet so the WFS is 0 ipm.

At step 704, a direct current electrode negative (DCEN) is applied to the electrode 904. As shown in Figure 9B, applying the DCEN to the electrode 904 causes arc 916 to form between the electrode 904 and the workpiece 902, which allows current to flow from the electrode 904 and into the workpiece 902. During this time, which is represented by time period 802 in Figure 8, the voltage is negative and, in some embodiments, can be between about -20 V and about -60 V. For example, in some embodiments, the voltage between the workpiece 902 and the electrode 904 can be about -20 V, about -30 V, about -40V, about -50 V, about - 60 V, between -30 and -50 V, between -40 and -60 V, or a value in a range defined by any of these values once the DCEN is applied.

The current can also be negative during time period 802 and, in some embodiments, can be between about -100 A and about -1200 A. For example, in some embodiments, the current can be about -100 A, about -200 A, about -300 A, about -400 A, about -500 A, about -600 A, about -700 A, about -800 A, about -900 A, about -1000 A, about -1100 A, about -1200 A, or a value in a range defined by any of these values. In some embodiments, the current fluctuates immediately after the arc 916 is established (e.g., during the initial few hundred ms of time period 802) but can stabilize shortly after the arc 916 is established. For example, in some embodiments, the current can initially fluctuate between about -100 A and about -1200 A but can stabilize at about -750 A after about 200 ms. In embodiments where the system 900 is a multi-arc system having multiple electrodes 904, the multiple electrodes 904 can be coupled together in parallel such that the total current flowing between the electrodes 904 and the workpiece 902 is the sum of the currents for the individual electrodes 904.

The heat given off by the arc 916 causes the surrounding metal (including the metal at the tip 906 and the workpiece metal near the arc 916) to melt. When the tip 906 melts, it falls on the workpiece 902 and mixes with the molten metal from the workpiece 902 to form the weld pool 922. Shortly after the arc 916 forms and the tip 906 melts off, the system 900 increases the WFS to account for the distance between the workpiece 902 and the electrode 904 increasing (due to the tip 906 melting off). In some embodiments, the WFS of the system during time period 802 is between 75 and 200 ipm. For example, in some embodiments, the WFS of the system during time period 802 can be about 110 ipm.

During time period 802, the current flowing through the electrode causes the portion of the electrode 904 between the contact tip 910 and the workpiece 902 to heats up (via resistive heating) and portion 936 of electrode 904 starts to glow. As shown in Figure 9B, the glowing portion 936 is initially very small and only extends a short distance away from the tip 906. However, as shown in in Figure 9C, the glowing portion 936 can extend to just below the top of the pile of flux 914 a time just over halfway through time period 802, as shown in Figure 9D, can extend above the pile of flux 914 by the end of time period 802.

During time period 802, the electrode 904 continues to preheat at a steady rate as the system 900 continues to apply a DCEN to the electrode 904. The voltage, current, and WFS remain generally stable, which can result in the bead shape of the weld formed during time period 802 being much improved.

At step 706, a DCEP is applied to the electrode 904. During this time, which is represented by time period 803 in Figure 8, the voltage and current are positive and current flows from the workpiece 902 and into the electrode 904. In some embodiments, the current can be between 20 and 60 V and the current can be between 200 and 1000 A during time period 803. For example, in some embodiments, the voltage can be about 40 V and the current can be about 650 A during time period 903. The WFS can also remain relatively constant during time period 903 and, in some embodiments, may be about the same as the WFS during time period 802. For example, in some embodiments, the WFS can be between 75 and 150 ipm during time period 803. Additionally, the electrode 904 can remain sufficiently preheated for optimal welding during time period 803. For example, as shown in Figures 9E-9G, the glowing portion 936 can consistently extend above the pile of flux 914 throughout time period 803 and the length of the glowing portion 936 can remain relatively constant during this time. At this point, the welding system 900 is fully operating at steady state, and the voltage, current, WFS, and temperature of the electrode 904 remain constant.

In some embodiments, the system 900 is configured to switch from applying the DCEN to applying the DCEP once electrode 904 is sufficiently preheated. However, it can be challenging for the system 900 to automatically determine whether the electrode 904 is sufficiently preheated. Accordingly, in some embodiments, the system 900 can be configured to switch from applying the DCEN to the electrode 904 to applying the DCEP after a predetermined amount of time. For example, in some embodiments, the system 900 is configured to apply the DCEN for between 0.5 and 7, between 0.5 and 1 seconds, between 1 and 2 seconds, between 2 and 3 seconds, between 3 and 4, between 4 and 5 seconds, between 5 and 6 seconds, between 6 and 7 seconds, between 2 and 6 seconds, less than 5 seconds, less than 3 seconds, less than 2 seconds, or a value in a range determined by any of these values, and then switching to applying the DCEP to the electrode 904. In some embodiments, the system 900 is configured to determine the stability of the arc 916 and to switch to applying the DCEP once determining that the arc 916 is sufficiently stable. For example, in some embodiments, the system 900 is configured to switch to applying the DCEP once determining that the voltage of the arc 916 remains within a given percentage of a predetermined voltage for a given amount of time, such as within 20%, 15%, 10%, 5%, 2%, 1%, or a value in a range defined by any of these values, of -50 V, -45 V, -40 V, -35 V, -30 V, or a value in a range defined by any of these values, for between 0.5 and 4 seconds, between 0.5 and 1 second, between 1 and 2 seconds, between 2 and 3 seconds, between 3 and 4 seconds, or a value in a range defined by any of these values. In some embodiments, the amount of time that the system 900 applies the DCEN before switching to applying the DCEP can be determined experimentally and can be based on the specific conditions and materials that are being used during the welding process, such as the composition of the workpiece 902, the electrode 904, and/or the flux 914, the capabilities of the welding system 900, and/or the desired welding parameters (e.g., voltage, current, travel speed, etc.). In some embodiments, the amount of time that the system 900 applies the DCEN before switching to applying the DCEP can be preprogrammed into the system 900 and/or can be set by an operator of the welding system 900.

As discussed above in connection with Figures 4-6G, when the system is operating in DCEP mode, current flows from the workpiece and into the electrode. When this happens, most of the heat generated by the arc is generated at the workpiece. For example, in some embodiments, at least 2/3 of the arc heat is generated in the workpiece while the remaining arc heat is generated in the electrode when a DCEP is applied. In contrast, when a DCEN is applied to the electrode and the workpiece, current flows from the electrode and into the workpiece and most of the heat generated by the arc is generated in the electrode instead of the workpiece. For example, in some embodiments, at least 2/3 of the arc heat is generated in the electrode instead of the workpiece when a DCEN is applied.

By using a DCEN to initiate the welding process and establish the arc between the electrode and the workpiece, the voltage, current, WFS, and electrode temperature remain more stable and less prone to fluctuations than when a DCEP is used to initiate the welding process. This increased stability avoids arc flares and hard shorts between the welding electrode and the workpiece. Additionally, the greater amount of heat generated in the electrode when the DCEN is applied results in the electrode preheating faster and at a more steady rate than an electrode when a DCEP is applied, which avoids prematurely melting the electrode wire and therefore avoids the system overcorrecting and causing the unmelted wire from striking the workpiece. Accordingly, the increased stability also reduces the likelihood of the ceramic extensions breaking due to the electrode wire contacting the ceramic extension. Additionally, using a DCEN to initiate the welding process can allow for the welding electrode to become sufficiently preheated and reach steady state more quickly than when a DCEP is used to initiate the welding process. For example, as discussed above in connection with Figures 4-6G, it can take between about 4 and 8 seconds for the system 600 to reach steady state welding when welding is initiated using DCEP. In contrast, when welding is initiated using DCEN, it can take about 2 seconds for the system to reach steady state welding. This means that it is about 2-4 times faster to reach to steady state than when a DCEP is used to initiate welding.

In some embodiments, the welding system can operate in a constant current (CC) mode where the system adjusts the voltage and the WFS to maintain the current at a preset value. For example, in the illustrated embodiment, the welding system is operating in a CC mode and the current is preset to -750 A during the arc-start process and 750 A during the steady state mode while the voltage and WFS fluctuate to maintain those currents. In other embodiments, however, welding system can operate in a constant voltage (CV) mode, where the system adjusts the current to maintain the voltage (and WFS) at a preset value. In some embodiments, the system can be capable of switching between CC and CV modes. For example, in some embodiments, the system can be configured to operate in either a CC or CV mode during the arc-start process and then switch to the other mode during the steady state process.

In the embodiment illustrated in Figures 4-6G, the system 600 applies a DCEP to the electrode 604 after applying a DCEN to initiate welding. In other embodiments, however, the system 600 can apply an alternating current to the electrode after applying the DCEN to initiate welding.

### Asymmetric AC Welding Initiation

In the previously-described embodiments, welding is initiated using a direct current welding technique (DCEN) and then a second direct current welding technique (DCEP) is used during steady state welding conditions. In other embodiments, however, alternating current (AC) welding processes can be used during welding initiation and steady state welding. In AC welding, the welding power source reverses the flow of current periodically such that the welding system quickly oscillates between DCEP and DCEN. In conventional AC welding processes, a symmetric AC is used for both welding initiating and steady state welding. In a symmetric AC, the positive and negative portions of the AC waveform are mirror images of each other and balance each other out such that the root mean squared (RMS) voltage and length of the positive and negative half-cycles are both identical. However, initiating welding using a symmetric AC can lead to poor arc quality during the arc-start process due to the welding electrode being insufficiently preheated. Accordingly, there is a desire for improved AC welding initiation processes that result in improved arc-start characteristics.

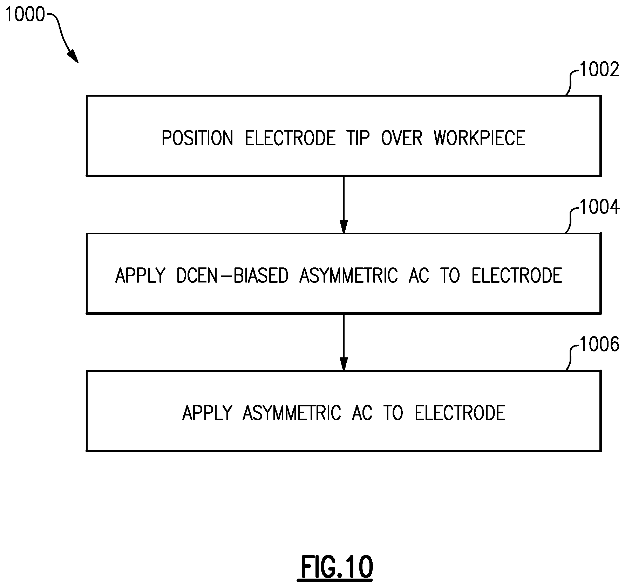

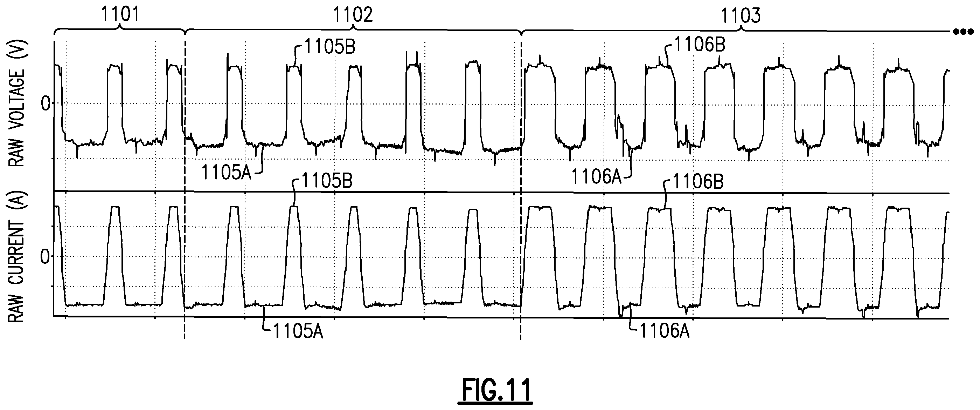

To improve the arc-start characteristics during an AC welding initiation process, the arc can be established by first applying an asymmetric AC that is DCEN biased and then applying a symmetric AC. An asymmetric AC refers to an AC waveform where the positive and negative portions are not mirror images of each other and there is an imbalance between the positive and negative half-cycles due to the RMS voltage and/or length of the positive and negative half-cycles being different. Accordingly, a DCEN-biased asymmetric AC is an asymmetric AC where the RMS voltage and/or the length of the negative half-cycle is greater than that of the positive half-cycle. Figure 10 is a flowchart illustrating is a method 1000 of operating a welding system that includes a DCEN-biased asymmetric AC arc-start process and Figure 11 is a graph of the voltage and current of the welding system before, during, and after the method 1000. In some embodiments, the welding system can include one or more processors or controllers communicatively coupled to the welding power supply and non-transitory computer readable storage medium. The non-transitory computer readable storage media stores instructions that when executed by the one or more processors or controllers, cause the one or more processors to perform various welding methods, including method 1000.

At step 1002 of the method, the welding process is initiated by submerging the tip of the electrode over the workpiece without applying a load between the electrode and the workpiece. During this time, which is represented by time period 1101 in Figure 11, the voltage measured by the welding system is the open circuit voltage but there is no current flowing between the electrode and the workpiece because a load has not yet been applied.

At step 1004, a DCEN-biased asymmetric AC is applied to the electrode, which causes an arc to form between the electrode and the workpiece and allows current to flow between the electrode and the workpiece. During this time, which is represented by time period 1102 in Figure 11, the voltage and current oscillate between negative half-cycles 1104A and positive half-cycles 1104B. However, because the applied load is DCEN-biased, the duration of the negative half-cycles 1104A are longer than the duration of the positive half-cycles 1104B. In some embodiments, the negative half-cycles 1104A are between 2 and 4 times longer than the positive half-cycles 1104B. In other embodiments, however, the negative half-cycles 1104A can be longer than the positive half-cycles by a different amount. For example, in some embodiments, the negative half-cycles are between 1.5 and 10 times longer than the positive half-cycles 1104B, between 1.5 and 10 times longer than the positive half-cycles 1104B, between 5 and 10 times longer than the positive half-cycles 1104B, between 2 and 4 times longer than the positive half-cycles 1104B, between 4 and 6 times longer than the positive half-cycles 1104B, between 6 and 10 times longer than the positive half-cycles 1104B, or a value in a range defined by any of these values. Because the negative half-cycles 1104A are longer than the positive half-cycles 1104B, a majority of each full AC waveform is negative and the system applies a DCEN for a majority of the time period 1102. For example, in some embodiments, the asymmetric AC is DCEN biased such that it is 70-80% DCEN and 20-30% DCEP. In other embodiments, however, the DCEN-biased asymmetric AC can be biased by a different amount. For example, in some embodiments, the asymmetric AC is DCEN biased such that it is 60-90% DCEN and 10-40%DCEP, 60-70% DCEN and 30-40% DCEP, 65-85% DCEN and 15-35% DCEP, or a value in a range defined by any of these ranges.

In some embodiments, such as the embodiment illustrated in Figure 11, the lengths of the negative and positive half-cycles 1104A, 1104B remain constant throughout time period 1102. In other embodiments, however, the lengths of one or both of the negative and positive half-cycles 1104A, 1104B can vary during time period 1102.

In some embodiments, such as the embodiment illustrated in Figure 11, the DCEN-biased asymmetric AC is configured such that the length of the negative half-cycles 1104A are longer than the length of the positive half-cycles 1104B but the RMS voltages of the negative and positive half-cycles 1104A, 1104B are the same (or within 10% of each other). In other embodiments, however, the RMS voltages of the negative and positive half-cycles 1104A, 1104B can be different. For example, in some embodiments, the RMS voltage of the negative half-cycles 1104A can be larger than the RMS voltage of the positive half-cycles 1104B. In some embodiments, such as the embodiment illustrated in Figure 11, the RMS voltages of the negative and positive half-cycles 1104A, 1104B can remain constant throughout time period 1102. In other embodiments, the RMS voltages of one or both of the negative and positive half-cycles can vary during time period 1102.

At step 1106, a symmetric AC is applied to the electrode. During this time, which is represented by time period 1003 in Figure 10, the RMS voltage and length of the negative half-cycles 1105A are approximately the same as the RMS voltage and length of the positive half-cycles 1105B. In some embodiments, the RMS voltage of the negative and positive half-cycles 1105A, 1105B of the symmetric AC are the same as the RMS voltage of the negative and positive half-cycles 1104A, 1104B of the DCEN-biased asymmetric AC. In some embodiments, the length of the negative half-cycle 1104A of the DCEN-biased asymmetric AC is greater than the length of the negative half-cycle 1105A of the symmetric AC. In some embodiments, the length of the positive half-cycle 1104B of the DCEN-biased asymmetric AC is less than the length of the positive half-cycle 1105B of the symmetric AC.

In some embodiments, the system is configured to switch from applying the DCEN-biased asymmetric AC to applying the symmetric AC once the electrode is sufficiently preheated. However, it can be challenging for the system to automatically determine whether the electrode is sufficiently preheated. Accordingly, in some embodiments, the system can be configured to switch from applying the DCEN-biased asymmetric AC to applying the symmetric AC after a predetermined amount of time. For example, in some embodiments, the system is configured to apply the DCEN-biased asymmetric AC for between 0.5 and 7, between 0.5 and 1 seconds, between 1 and 2 seconds, between 2 and 3 seconds, between 3 and 4, between 4 and 5 seconds, between 5 and 6 seconds, between 6 and 7 seconds, between 2 and 6 seconds, less than 5 seconds, less than 3 seconds, less than 2 seconds, or a value in a range determined by any of these values, and then switching to applying the symmetric AC. In some embodiments, the system is configured to determine the stability of the arc between the electrode and the workpiece and to switch to applying the symmetric AC once determining that the arc is sufficiently stable. In some embodiments, the amount of time that the system applies the DCEN-biased asymmetric AC before switching to applying the symmetric AC can be determined experimentally and can be based on the specific conditions and materials that are being used during the welding process, such as the composition of the workpiece, the electrode, and/or the flux, the capabilities of the welding system, and/or the desired welding parameters (e.g., voltage, current, travel speed, etc.). In some embodiments, the amount of time that the system applies the DCEN-biased asymmetric AC before switching to applying the symmetric AC can be preprogrammed into the system and/or can be set by an operator of the welding system.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. Each of these blocks may be implemented in a variety of different ways. Any suitable combination of the elements and acts of the various embodiments described above can be combined to provide further embodiments. The various features and processes described above may be implemented independently of one another, or may be combined in various ways. All possible combinations and subcombinations of features of this disclosure are intended to fall within the scope of this disclosure.

## Claims

1. A welding system (900), comprising:
a welding power source; and
an electrode assembly (300B) operably coupled to the welding power source and an electrode (304B, 904),
wherein the welding system is configured to apply a direct current electrode negative (DCEN) to the electrode using the electrode assembly to establish an arc between the electrode and a workpiece and to apply a direct current electrode positive (DCEP) or alternating current (AC) to the electrode after the arc is established.

2. The welding system of Claim 1, wherein the electrode assembly comprises a contact tip and wherein the electrode assembly is configured to provide the DCEN to the electrode using the contact tip.

3. The welding system of Claim 1 or 2, wherein the welding system
- comprises a submerged arc welding (SAW) system,
and/or
- is configured such that, during welding, a ratio between an electrical stick-out distance and a diameter of the electrode exceeds 15.

4. The welding system of any of the previous Claims, wherein the welding system is configured to:
- apply the DCEP to the electrode less than 5 seconds after applying the DCEN to the electrode;
and/or
- apply the AC to the electrode less than 5 seconds after applying the DCEN to the electrode;
and/or
- apply the direct current electrode negative (DCEN) having a voltage between about -20 V and -60 V and has a current between about -100 A and about -1200 A.

5. A method of operating a welding system, the method comprising:
- applying a direct current electrode negative (DCEN) to an electrode to establish an arc between the electrode and a workpiece; and
- after applying the DCEN to the electrode, applying a direct current electrode positive (DCEP) or alternating current (AC) to the electrode.

6. The method of Claim 5, wherein applying the DCEP or AC to the electrode comprises applying the DCEP or AC to the electrode automatically and without receiving any additional input from an operator of the welding system,
wherein applying the DCEP or AC to the electrode preferably comprises applying the DCEP or AC to the electrode less than 5 seconds after applying the DCEN to the electrode.

7. The method of Claim 5 or 6, wherein
- a ratio between an electrical stick-out distance and a diameter of the electrode exceeds 15 while the DCEN is being applied to the electrode,
and/or
- a voltage of the DCEN is between about -20 V and -60 V,
and/or
- a current of the DCEN is between about -100 A and about -1200 A.

8. A method of operating a welding system, the method comprising:
applying a direct current electrode negative (DCEN)-biased asymmetric alternating current (AC) to an electrode to establish an arc between the electrode and a workpiece; and
after applying the DCEN-biased asymmetric AC to the electrode, applying a symmetric AC to the electrode.

9. The method of Claim 8, wherein the DCEN-biased asymmetric AC comprises at least one negative half-cycle and at least one positive half-cycle and wherein the at least one negative half-cycle is longer than the at least one positive half-cycle,
wherein preferably the at least one negative half-cycle comprises a first negative half-cycle, wherein the symmetric AC comprises a second negative half-cycle, and wherein the first negative half-cycle is longer than the second negative half-cycle.

10. The method of Claim 8 or 9, wherein
- a first root mean squared (RMS) voltage of the at least one negative half-cycle is within 10% of a second RMS voltage of the at least one positive half-cycles
and/or
- a ratio between an electrical stick-out distance and a diameter of the electrode exceeds 15 while the DCEN-biased asymmetric AC is being applied to the electrode.

11. The method of any of the Claims 8-10, wherein applying the symmetric AC to the electrode comprises applying the symmetric AC to the electrode less than 5 seconds after applying the DCEN-biased asymmetric AC to the electrode
wherein preferably applying the symmetric AC to the electrode comprises applying the symmetric AC to the electrode less than 3 seconds after applying the DCEN-biased asymmetric AC to the electrode.

12. Non-transitory computer readable storage media storing instructions that when executed by a system of one or more processors, cause the one or more processors to:
apply a direct current electrode negative (DCEN) to an electrode of a welding system to establish an arc between the electrode and a workpiece; and
after applying the DCEN to the electrode, apply a direct current electrode positive (DCEP) or alternating current (AC) to the electrode.

13. The non-transitory computer readable storage media of Claim 12, wherein the instructions, when executed by the system of one or more processors, cause:
- the one or more processors to apply the DCEP or AC to the electrode automatically and without receiving any additional input from an operator of welding system,
and/or
- the one or more processors to apply the DCEP to the electrode less than 5 seconds after applying the DCEN to the electrode,
and/or
- the one or more processors to apply the AC to the electrode less than 5 seconds after applying the DCEN the electrode.

14. Non-transitory computer readable storage media storing instructions that when executed by a system of one or more processors, cause the one or more processors to:
apply a direct current electrode negative (DCEN)-biased asymmetric alternating current (AC) to an electrode of a welding system to establish an arc between the electrode and a workpiece; and
after applying the DCEN-biased asymmetric AC to the electrode, apply a symmetric AC to the electrode.

15. The non-transitory computer readable storage media of Claim 14, wherein
- the instructions, when executed by the system of one or more processors, cause
∘ the one or more processors to apply the symmetric AC to the electrode automatically and without receiving any additional input from an operator of the welding system,
and/or
∘ the one or more processors to apply the symmetric AC to the electrode less than 5 seconds after applying the DCEN-biased asymmetric AC to the electrode
and/or
- the DCEN-biased asymmetric AC comprises at least one negative half-cycle and at least one positive half-cycle and wherein the at least one negative half-cycle is longer than the at least one positive half-cycle, wherein preferably a first root mean squared (RMS) voltage of the at least one negative half-cycle is within 10% of a second RMS voltage of the at least one positive half-cycles, and wherein preferably the at least one negative half-cycle comprises a first negative half-cycle, wherein the symmetric AC comprises a second negative half-cycle, and wherein the first negative half-cycle is longer than the second negative half-cycle.
